# EUROPEAN PATENT SPECIFICATION

(11) **EP 2 729 346 B1**
(45) Date of publication and mention of the grant of the patent: **27.04.2016**
(21) Application number: 12818935.4
(22) Date of filing: 06.07.2012
(51) Int. Cl.: B62D 7/08, B62D 7/09

(54) **STEERING SYSTEM FOR A VEHICLE**
LENKSYSTEM FÜR EIN FAHRZEUG
SYSTÈME DE DIRECTION POUR VÉHICULE

(30) Priority: 08.07.2011 IN MM19702011
(43) Date of publication of application: 14.05.2014
(73) Proprietor: Tata Motors Limited, 400 001 Mumbai, Maharashtra (IN)
(72) Inventor: MANTIKAS, Nikolaos, Coventry CV 4 7AL (GB); HILLMAN, Paul, J., Coventry CV 4 7AL (GB)
(74) Representative: Ruuskanen, Juha-Pekka
(86) International application number: PCT/IN2012/000479
(87) International publication number: WO 2013/054339

(56) References cited:
- EP-A1- 1 870 316
- EP-A2- 1 775 196
- WO-A1-2005/009826
- US-A1- 2003 106 725
- US-A1- 2009 241 708

## Description

### TECHNICAL FIELD

The present invention generally relates to steering systems for automotive vehicles, and more particularly it relates to a steering assembly system for an automotive vehicle having 'zero-turn' or 'near zero-turn' maneuvering capabilities.

### BACKGROUND OF THE INVENTION

Automotive vehicles, such as cars, typically comprise an engine, a transmission suitably connecting the engine to driving wheels, and a set of steerable wheels. The steerable wheels are controlled by a steering wheel provided adjacent to the driver's seat. The maneuvering of the steering wheel moves the pair of steerable front wheels, thereby maneuvering the vehicle.

The vehicles are often required to be maneuvered in a congested environment, for example, during parking. Designers, therefore, strive to reduce the turning circle of a vehicle, balancing this with the constraining features of package and system geometry to ensure competitive comfort, safety, steering, ride and handling performance, however, hitherto, with limited success.

For conventional passenger car applications there are a number of aspects which restrict the design freedom for zero turn geometries, particularly: Drive line layout and orientation, Ergonomic package (including controls), Suspension and Steering geometry, and Vehicle Safety performance.

Front steering and wheel geometry, facilitating zero turn maneuvers, has been seen in off highway, slow moving vehicles. However, in these instances, a non-suspended rigid axle configuration is incorporated as opposed to independent suspension or suspended axle configuration.

International patent application publication number WO 2005/009826 A1 discloses a steering apparatus for steering wheels of a vehicle that comprises support means arranged for supporting said wheels, driving means arranged for rotating said support means around respective longitudinal axis means and connecting means arranged for connecting said driving means with said support means, said connecting means comprising transmission gear means.

### OBJECTS OF THE INVENTION

The objective of invention is to provide a reliable, simple and cost effective, steering system.

Another objective of the invention is to allow a passenger vehicle with independent front suspension to rotate within the track of the rear axle.

Yet another of the invention is to provide steering system that enables zero turn of the vehicle without ignoring the key performance aspects of ride, handling, steering and the like.

Further objects an features of the invention will become apparent from the following detailed description when considered in conjunction with the drawings.

### SUMMARY OF THE INVENTION

The various embodiments of the present invention disclose a steering system for a vehicle. The steering system comprising at least one steerable wheel mounted on a wheel hub, the at least one wheel is steerable by means of a gear set assembly connected to a steering mechanism of the vehicle, wherein the wheel hub is mounted on a steering pivot shaft. The gear set assembly further comprises a plurality of meshed gears having an input gear mechanically coupled to the steering mechanism and an output gear integrally connected to the steering pivot, such that the steering rotation from the steering mechanism is transferred to the steerable wheel through the plurality of meshed gears. In an embodiment of the present invention the input gear and steering pivot shaft are supported on an independent wheel suspension.

### BRIEF DESCRIPTION OF THE DRAWINGS

FIG. 1 illustrates a perspective view of a steering system, according to an embodiment of the invention, and
FIG. 2A, 2B, and 2C illustrate various top views of a portion of the steering system of FIG. 1, according to an embodiment of the invention.

### DETAILED DESCRIPTION OF THE INVENTION

Referring now to the drawings wherein the showings are for the purpose of illustrating a preferred embodiment of the invention only, and not for the purpose of limiting the same.

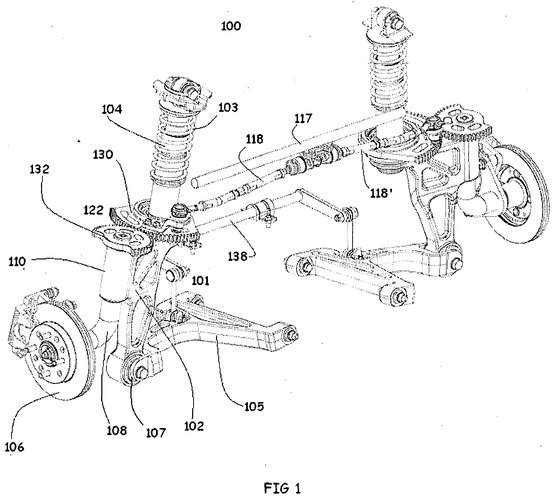

FIG. 1 illustrates a perspective view of a steering system 100, according to an embodiment of the invention. The steering system 100 (also referred "steering module 100") is to be used for steering wheels of a vehicle which may be a car, an SUV (Sports Utility Vehicle), a commercial vehicle, or any other automobile, without deviating from the invention as defined in the claims.

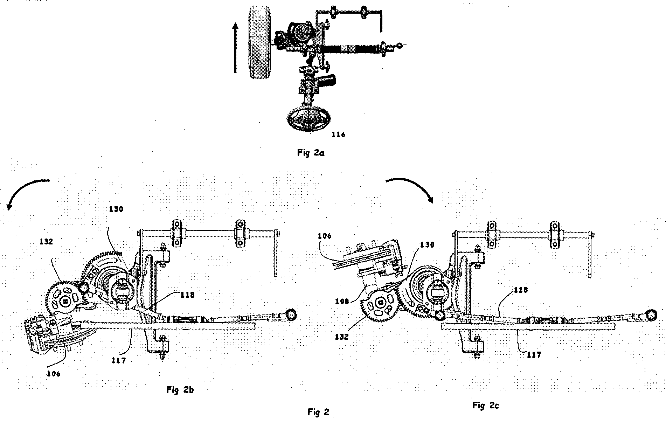

The vehicle, as would be apparent to those skilled in the art, includes a body (or frame/sub-frame) carrying a set of wheels, a prime mover driving the wheels, a steering wheel and other vehicle components. The set of wheels support the vehicle of a surface and typically are powered by the prime mover through a transmission system for moving the vehicle on a surface, such as a road. Further, the rotatable steering wheel 116 is mechanically linked with a steerable wheel, and the rotation of the steering wheel turns the wheel, thereby maneuvering the vehicle (Refer Fig 2a"). The steerable wheel may be on the front axle of the vehicle. However, the steerable wheel may alternatively be on rear axle (or on both axles), without deviating from the spirit of the present invention.

Referring again to FIG. 1 and Fig 2a, a steering rack 117 is coupled with the steering wheel 116. The steering rack 117 is configured to move laterally with rotation of the steering wheel through a rack and pinion arrangement. In an alternative embodiment of the invention, the steering rack 117 may be replaced with a steering gear box, which may be configures to receive rotational input from the steering wheel. A tie rod 118 is connected with the steering rack 117 and move with the movement of the steering rack 117. The tie rod 118 is configured to transfer such movement to the steerable wheel through a rotation transfer mechanism.

The rotation transfer mechanism includes a gear set assembly 122 supported on an independent suspension system 101 for the steerable wheel. The movement from the tie rod 118 to the wheel passes through the gear set assembly 122. In one embodiment of the present invention, the gear set assembly 122 includes at least two gears, meshed to transfer rotational motion. A first gear 130 of the gear set assembly 122 is connected to the tie rod and a second gear 132 of the gear set assembly is mechanically connected to the wheel hub. In such an embodiment, the gear set includes a first gear, such as the first gear 130 and a second gear such as the second gear 132. The first gear 130 is connected to an end portion of the tie rod 118, and is rotatably mounted on the suspension system 101 of the steerable wheel. The first gear 130 is meshed with the second gear 132. More specifically, a toothed peripheral portion of the first gear 130 is engaged with a toothed peripheral portion of the second gear 132. The second gear 132 is integrally mounted on a pivot shaft 108 supported on the suspension system and connected to a wheel hub 106.

In accordance to an embodiment of the present invention, the independent suspension system 101 of the steerable wheel supports the gear seat assembly 122. The suspension system includes an upright member 102 with an integrated pivot sleeve 110. A damper unit 104 is rigidly mounted on the upright member 102.

The damper unit 104 may include a damper having a spring 103 coaxially mounted thereon. In an embodiment of the present invention, the spring may be mounted coaxially with the damper but could be offset to counter any damper side force. Alternatively, a control arm can be incorporated; the damper then would no longer be part of the assembly. A first end portion of the damper unit 104, as mentioned earlier, is connected with the upright member 102, while the second end portion of a damper unit 104 may be connected to the vehicle body via a bush (not numbered).

In an embodiment of the present invention, the input gear 130 is mounted at lower mounting portion of the damper unit with the upright member 102 and rotate about the axis of the damper. The input gear has a through hole to accept the damper unit and may be mounted directly on the upright member 102 or on the damper 104. The integrated pivot sleeve 110 has a vertical imaginary axis parallel and offset to the axis of the damper unit 104.

A lower control arm 105 connected at the lower end of the upright member 102. The upright member 102 is locked via a bush 107 onto the lower control arm 105 permitting large rotation about the bush axis only, allowing for suspension bump and rebound travel. The lower control arm 105 is mounted to the body (or frame/sub-frame) via two bushes, the orientation of which can be tuned depending on requirements. The lower control arm 105 is uniquely profiled to allow a wheel angular span of approximately 180 degree with facility for over 105 degree for the in-board rotation.

A wheel hub 106 is mounted on the steering pivot shaft 108 and the hub is free to rotate about the pivot shaft, as shown in FIG 1. Particularly, a steering pivot shaft 108 is received in the sleeve portion 110 of the upright member 102. The rotation of the steering pivot shaft 108 within the sleeve portion is provisioned via bearings. The lower portion of the pivot shaft 108 is extended laterally to mount the wheel hub 106. The lateral extension also facilitates mounting necessary braking arrangements for the wheel hub. The wheel hub 106 is configured to removably hold the wheel, in a known manner.

In an embodiment of the invention the output gear 132 may be mounted on the steering pivot shaft 108 supported on the pivot sleeve 110. The pivot sleeve 110 axis is parallel and offset from the axis of the damper unit 104. The pivot shaft 108 is supported on the pivot sleeve 110 and is adapted to rotate within the sleeve about an axis parallel and offset from the axis of the damper unit 104. Further the pivot shaft vertical axis is offset from the axis of the wheel vertical axis.

Referring to Fig 1, in an embodiment of present invention, the steering wheel is mechanically linked with a pair of steerable wheels, and the rotation of the steering wheel turns the pair of wheels, thereby maneuvering the vehicle. A pair of tie rods, a first tie rod 118 and a second tie rod 118', is connected with the steering rack 117. Because of which, each of the first tie rod 118 and the second tie rod 118' also move with the movement of the steering rack 117. The first tie rod 118 and the second tie rod 118' are configured to transfer such movement to respective wheels through a rotation transfer mechanism as described above.

The ratio between the input gears (130) and output gears (132), together with the position of the tie rod end on the input gear, can be adjusted to provide different steering characteristics. The steering pivot axis (centre for wheel rotation) is offset and parallel to the damper axis to facilitate approximately 180 degree wheel rotation about the lower control arms which in itself is designed to facilitate this wheel rotation. The steering module 100 may further include an anti-roll bar 138 attached onto the lower control arms, but can equally be mounted on the upright or damper unit.

As shown in FIG 2, during the operation of the steering module 100 of vehicle i.e. rotation of the steering wheel, the movement of the tie rod 118 rotates the first gear 130. Because of the toothed meshing of the first gear 130 with the second gear 132, the rotation of the first gear 130 also rotates the second gear 132. The second gear 132 rotates in an opposite direction, because of the meshing with the first gear 130, and about an imaginary vertical longitudinal axis on the pivot shaft 108 of the wheel hub 106. The steering module 100 delivers Ackerman steering and tunable independent suspension properties; typical of passenger car automotive applications.

Referring to fig 2, fig 2a, 2b and 2c show the system for wheel positions, straight ahead; full left lock and full right lock respectively.

In one embodiment of the present invention the steering rack is configured to move left side with anti-clockwise rotation of the steering wheel, eventually rotates the wheel carried by the first wheel hub 106 anti-clockwise direction, thereby enabling the turning of the vehicle in left direction. In other embodiments of the present invention, the steering rack moves right side with clockwise rotation of the steering wheel may eventually rotate the first wheel carried by the first wheel hub 106 and the second wheel carried by the second wheel hub 106 in a clockwise direction thereby enabling the turning of the vehicle in right direction.

The foregoing description provides specific embodiments of the present invention. It should be appreciated that these embodiment are described for purpose of illustration only, and that numerous other alterations and modifications may be practiced by those skilled in the art without departing from the spirit and scope of the invention. It is intended that all such modifications and alterations be included insofar as they come within the scope of the invention as claimed or the equivalents thereof.

| **Referral Numerals** | **Description** |
|---|---|
| 100 | Steering system, Steering module |
| 101 | Suspension system |
| 102 | Upright member |
| 103 | Spring |
| 104 | Damper unit |
| 105 | Lower control arm |
| 106 | Wheel hub |
| 108 | Steering pivot shaft |
| 110 | Sleeve portion |
| 116 | Steering Wheel |
| 117 | Steering rack |
| 118, 118' | Tie rod |
| 122 | Gear set assembly |
| 130 | First gear |
| 132 | Second gear |
| 138 | Anti-roll bar |

## Claims

1. A steering system (100) for a vehicle comprising;
at least one steerable wheel (116) mounted on a wheel hub (106), the at least one wheel (116) is steerable by means of a gear set assembly (122) connected to a steering mechanism of the vehicle,
wherein the wheel hub (106) is mounted on a steering pivot shaft (108), wherein the gear set assembly (122) further comprises a plurality of meshed gears having an input gear (130) mechanically coupled to the steering mechanism and an output gear (132) integrally connected to the steering pivot shaft (108),
wherein the input gear (130) and the steering pivot shaft (108) are rotatably mounted on an independent wheel suspension system (101),
wherein the suspension system (101) further comprises an upright member (102) with an integrated pivot sleeve (110) for supporting the steering pivot shaft (108), a damper unit (104) rigidly mounted on the upright member (102), and a lower control arm (105) hingedly connected at a lower end of the upright member (102); and
**characterized in that** the input gear (130) is adapted to be rotated about an axis of the damper unit (104).

2. The steering system (100) as claimed in claim 1 wherein the sleeve (110) axis is parallel and offset from the axis of the damper unit (104).

3. The steering system (100) as claimed in any preceding claim wherein the pivot shaft (108) is supported on the pivot sleeve (110) and is adapted to rotate within the sleeve (110) about an axis parallel and offset from the axis of the damper unit (104).

4. The steering system (100) as claimed in claim 1 wherein the steering mechanism comprises of a steering wheel (116) mounted on a steering column, the column connected to a steering rack (117) and pinion, and at least a tie rod (118, 118') is connected to the steering rack (117).

5. The steering system (100) as claimed in claim 1 wherein the steering mechanism comprises of a steering wheel (116) mounted on a steering column coupled to a steering gear and at least a tie rod (118, 118') is connected to the steering gear.

6. The steering system (100) as claimed in any preceding claim wherein a tie rod (118, 118') is connected to the input gear (130) of the gear set assembly (122).

7. The steering system (100) as claimed in claim 1 wherein the lower control arm (105) is mounted on a body of the vehicle.

8. The steering system (100) as claimed in any preceding claim wherein a lower portion of the pivot shaft (108) is extended laterally to mount the wheel hub (106).

9. The steering system (100) as claimed in any preceding claim wherein the gears are sector gears.

10. The steering system (100) as claimed in any preceding claim wherein a pair of wheels is steerable by respective gear set assemblies (122) connected to the steering mechanism.

11. An automobile having a steering system (100) as claimed in any of claims 1 to 10.

## Patentansprüche

1. Lenkanlage (100) für ein Fahrzeug, die Folgendes umfasst:
mindestens ein lenkbares Rad (116), das an einer Radnabe (106) montiert ist, wobei das mindestens eine Rad (116) mittels einer Zahnradsatzanordnung (122) lenkbar ist, die mit einem Lenkmechanismus des Fahrzeugs verbunden ist,
wobei die Radnabe (106) an einem Lenkschwenkzapfen (108) montiert ist,
wobei die Zahnradsatzanordnung (122) weiterhin mehrere im Eingriff stehende Zahnräder mit einem Antriebszahnrad (130), das mit dem Lenkmechanismus mechanisch gekoppelt ist, und einem Abtriebszahnrad (132), das mit dem Lenkschwenkzapfen (108) integral verbunden ist, umfasst,
wobei das Antriebszahnrad (130) und der Lenkschwenkzapfen (108) an einem unabhängigen Radaufhängungsmechanismus (101) drehbar montiert sind,
wobei der Aufhängungsmechanismus (101) weiterhin ein vertikales Element (102) mit einer integrierten Schwenkmanschette (110) zum Tragen des Lenkschwenkzapfens (108), eine Dämpfereinheit (104), die an dem vertikalen Element (102) starr montiert ist, und einen unteren Steuerarm (105), der mit einem unteren Ende des vertikalen Elements (102) klappbar verbunden ist, umfasst; und
**dadurch gekennzeichnet, dass** das Antriebszahnrad (130) dazu eingerichtet ist, um eine Achse der Dämpfereinheit (104) gedreht zu werden.

2. Lenkanlage (100) nach Anspruch 1, wobei die Achse der Manschette (110) zu der Achse der Dämpfereinheit (104) parallel und von dieser versetzt ist.

3. Lenkanlage (100) nach einem vorhergehenden Anspruch, wobei der Schwenkzapfen (108) auf der Schwenkmanschette (110) getragen wird und dazu eingerichtet ist, sich in der Manschette (110) um eine Achse zu drehen, die zu der Achse der Dämpfereinheit (104) parallel und von dieser versetzt ist.

4. Lenkanlage (100) nach Anspruch 1, wobei der Lenkmechanismus ein Lenkrad (116) umfasst, das an einer Lenksäule montiert ist, wobei die Säule mit einer Zahnstange (117) und einem Ritzel verbunden ist und mindestens eine Spurstange (118, 118') mit der Zahnstange (117) verbunden ist.

5. Lenkanlage (100) nach Anspruch 1, wobei der Lenkmechanismus ein Lenkrad (116) umfasst, das an einer Lenksäule montiert ist, die mit einem Lenkgetriebe verbunden ist, und wobei mindestens eine Spurstange (118, 118') mit dem Lenkgetriebe verbunden ist.

6. Lenkanlage (100) nach einem vorhergehenden Anspruch, wobei eine Spurstange (118, 118') mit dem Antriebszahnrad (130) der Zahnradsatzanordnung (122) verbunden ist.

7. Lenkanlage (100) nach Anspruch 1, wobei der untere Steuerarm (105) an einer Karosserie des Fahrzeugs montiert ist.

8. Lenkanlage (100) nach einem vorhergehenden Anspruch, wobei ein unterer Teil des Schwenkzapfens (108) seitlich erweitert ist, um die Radnabe (106) zu montieren.

9. Lenkanlage (100) nach einem vorhergehenden Anspruch, wobei die Zahnräder Zahnsegmente sind.

10. Lenkanlage (100) nach einem vorhergehenden Anspruch, wobei ein Paar Räder durch jeweilige Zahnradsatzanordnungen (122) lenkbar ist, die mit dem Lenkmechanismus verbunden sind.

11. Kraftfahrzeug mit einer Lenkanlage (100) nach einem der Ansprüche 1 bis 10.

## Revendications

1. Système de direction (100) pour un véhicule, comprenant :
au moins une roue dirigeable (116) montée sur un moyeu de roue (106), ladite au moins une roue (116) étant apte à être dirigée au moyen d'un ensemble à train d'engrenages (122) raccordé à un mécanisme de direction du véhicule,
cas dans lequel le moyeu de roue (106) est monté sur un arbre de pivot de direction (108),
cas dans lequel l'ensemble à train d'engrenages (122) comprend en outre une pluralité de roues dentées engrenées possédant un engrenage d'entrée (130) lequel est mécaniquement accouplé au mécanisme de direction, et un engrenage de sortie (132) lequel est raccordé de façon intégrante à l'arbre de pivot de direction (108),
cas dans lequel l'engrenage d'entrée (130) et l'arbre de pivot de direction (108) sont montés de façon rotative sur un système de suspension de roues indépendant (101),
cas dans lequel le système de suspension (101) comprend en outre un élément vertical (102) avec un manchon de pivot intégré (110) pour soutenir l'arbre de pivot de direction (108), une unité d'amortissement (104) montée de façon rigide sur l'élément vertical (102), et un bras de commande inférieur (105) lequel est raccordé par articulation à une extrémité inférieure de l'élément vertical (102) ; et
**caractérisé en ce que** l'engrenage d'entrée (130) est conçu pour être soumis à rotation autour d'un axe de l'unité d'amortissement (104).

2. Système de direction (100) selon la revendication 1, l'axe du manchon (110) étant parallèle à l'axe de l'unité d'amortissement (104) et décalé par rapport à l'axe de l'unité d'amortissement.

3. Système de direction (100) selon l'une quelconque des revendications précédentes, l'arbre de pivot (108) prenant appui sur le manchon de pivot (110) et étant conçu pour tourner à l'intérieur du manchon (110) autour d'un axe qui est parallèle à l'axe de l'unité d'amortissement (104) et décalé par rapport à l'axe de l'unité d'amortissement.

4. Système de direction (100) selon la revendication 1, le mécanisme de direction comprenant une roue de direction (116) montée sur une colonne de direction, la colonne étant raccordée à une crémaillère de direction (117) et un pignon, et au moins une biellette (118, 118') raccordée à la crémaillère de direction (117).

5. Système de direction (100) selon la revendication 1, le mécanisme de direction comprenant une roue de direction (116) montée sur une colonne de direction accouplée à un engrenage de direction, et au moins une biellette (118, 118') raccordée à l'engrenage de direction.

6. Système de direction (100) selon l'une quelconque des revendications précédentes, la biellette (118, 118') étant raccordée à l'engrenage d'entrée (130) de l'ensemble à train d'engrenages (122).

7. Système de direction (100) selon la revendication 1, le bras de commande inférieur (105) étant monté sur la caisse du véhicule.

8. Système de direction (100) selon l'une quelconque des revendications précédentes, la portion d'abaissement de l'arbre de pivot (108) étant déployée dans le plan latéral en vue d'un montage sur le moyeu de roue (106).

9. Système de direction (100) selon l'une quelconque des revendications précédentes, les engrenages étant des secteurs dentés.

10. Système de direction (100) selon l'une quelconque des revendications précédentes, une paire de roues, aptes à être dirigées par un ensemble à train d'engrenages (122) respectif, étant raccordées au mécanisme de direction.

11. Automobile munie d'un système de direction (100) selon l'une quelconque des revendications 1 à 10.
